# EUROPÄISCHE PATENTSCHRIFT

(11) **EP 4 017 784 B1**
(45) Veröffentlichungstag und Bekanntmachung des Hinweises auf die Patenterteilung: **28.06.2023**
(21) Anmeldenummer: 20754732.4
(22) Anmeldetag: 11.08.2020
(51) Int. Cl.: B62D 5/00, B62D 1/16

(54) **LENKSÄULE FÜR EIN KRAFTFAHRZEUG MIT UMDREHUNGSBEGRENZUNG**
ADJUSTABLE STEERING COLUMN FOR A MOTOR VEHICLE WITH ROTATION LIMITATION
COLONNE DE DIRECTION RÉGLABLE À LIMITE DE ROTATION POUR VÉHICULE AUTOMOBILE

(30) Priorität: 20.08.2019 DE 102019122321
(43) Veröffentlichungstag der Anmeldung: 29.06.2022
(73) Patentinhaber: thyssenkrupp Presta AG, 9492 Eschen (LI); thyssenkrupp AG, 45143 Essen (DE)
(72) Erfinder: REITER, Gerald, 5061 Elsbethen (AT)
(74) Vertreter: thyssenkrupp Intellectual Property GmbH
(86) Internationale Anmeldenummer: PCT/EP2020/072455
(87) Internationale Veröffentlichungsnummer: WO 2021/032530

(56) Entgegenhaltungen:
- EP-A1- 3 476 692
- DE-A1- 10 017 049
- DE-B3-102013 014 138

## Beschreibung

Die vorliegende Erfindung betrifft eine Lenksäule für ein Kraftfahrzeug mit den Merkmalen des Oberbegriffs des Anspruchs 1.

Solche Lenksäulen kommen bevorzugt bei Steer-by-Wire-Lenksystemen zum Einsatz, bei denen es keine direkte mechanische Kopplung zwischen dem Lenkrad bzw. der Lenkwelle und dem Lenkgestänge gibt und die Kraftfahrzeugräder werden direkt mit Hilfe eines Servomotors, der Bestandteil des Feedback-Aktuators ist, bewegt. Der maximale Einschlagwinkel des Lenkrades ist daher nicht mehr über mechanische Anschläge im Lenkgetriebe definiert. Der maximale Lenkwinkeleinschlag der Räder ist in Steer-by-Wire-Systemen aber dennoch beschränkt. Dem Fahrer ist daher anzuzeigen, wann ein maximaler Lenkeinschlag erreicht wird. Im einfachsten Fall kann ein mechanischer Lenkanschlag verwendet werden, welcher den maximalen Einschlagwinkel des Lenkrades auf einen bestimmten Winkel begrenzt.

Aus der Offenlegungsschrift DE 10 312 516 A1 ist eine Lenksäule mit einer mechanischen Umdrehungsbegrenzung bekannt. Die Umdrehungsbegrenzung weist zwei Scheiben mit jeweils einer Spiralbahn auf, wobei zwischen den Spiralbahnen eine Kugel angeordnet ist. Die Kugel verlagert sich bei der Lenkwellenrotation in den Spiralbahnen. Nachteil dieser Lösung ist die hohe Toleranzanfälligkeit. Die Kugeln können in den Spiralbahnen klappern und bei einem Missbrauch kann die Umdrehungsbegrenzung klemmen, so dass die Führung des Kraftfahrzeugs beeinträchtigt ist.

Aus der DE 10 2013 014138 B3 ist eine gattungsgemäße Lenksäule bekannt.

Es ist daher Aufgabe der Erfindung, eine Lenksäule für ein Kraftfahrzeug mit einer verbesserten Umdrehungsbegrenzung anzugeben, die einen sicheren Betrieb gewährleistet und eine geringe Klapperneigung aufweist.

Diese Aufgabe wird von einer Lenksäule für ein Kraftfahrzeug mit den Merkmalen des Anspruchs 1 gelöst. Vorteilhafte Weiterbildungen der Erfindung können den Unteransprüchen entnommen werden.

Demnach ist eine Lenksäule für ein Kraftfahrzeug umfassend eine Lenkwelle, die in einer Lenkwellenlagereinheit drehbar gelagert ist, und eine Umdrehungsbegrenzungseinrichtung, die dazu eingerichtet ist, ein Verdrehen der Lenkwelle zu begrenzen, wobei die Umdrehungsbegrenzungseinrichtung einen Kulissenträger aufweist, der an der Lenkwellenlagereinheit befestigt ist und der eine spiralförmige, die Lenkwelle umgebende Kulissenbahn aufweist, wobei in der Kulissenbahn ein Kulissenstein verlagerbar geführt ist, vorgesehen, wobei der Kulissenstein mit einer Wippe gekoppelt ist, wobei die Wippe verkippbar an der Lenkwelle gehalten ist, wobei die Wippe wenigstens einen Gegenanschlag aufweist, der mit einem an der Lenkwellenlagereinheit ausgebildeten oder befestigten Anschlag zur Drehbegrenzung der Drehung der Lenkwelle in Wirkeingriff bringbar ist.

Bevorzugt weist der Kulissenträger genau eine einzige Kulissenbahn auf. Bevorzugt ist die Kulissenbahn als rillenförmige Nut oder als Durchbrechung ausgebildet, also als gewölbtes langgestrecktes Loch.

Durch das Bereitstellen eines Anschlages ist ein sicherer Betrieb der Umdrehungsbegrenzungseinrichtung gewährleistet. Das Auftreten von Klappergeräuschen kann zudem vermieden werden. Die Lenkwelle umfasst bevorzugt eine Außenwelle, in der eine Innenwelle verschiebbar aufgenommen ist, wobei die Außenwelle mit der Innenwelle, bevorzugt unter Zwischenschaltung einer bevorzugt aus Kunststoff gebildeten Hülse, drehmomentenschlüssig gekoppelt sind. Die Innenwelle kann als Vollwelle oder als Hohlwelle ausgebildet sein. Ein Ende der Lenkwelle weist einen Koppelabschnitt auf, der mit einem Lenkhandhabe, auch als Lenkrad bezeichnet, drehmomentenschlüssig koppelbar ist.

Der Kulissenträger ist bevorzugt eine Scheibe, wobei die spiralförmige Kulissenbahn auf eine Oberseite aufgebracht ist. Die spiralförmige Kulissenbahn ist vorzugsweise nutförmig. Der Kulissenträger ist vorzugsweise an der Lenkwellenlagereinheit mittels eines an der Lenkwellenlagereinheit befestigten Gehäuses gehalten, so dass der Kulissenträger drehfest an der Lenkwellenlagereinheit gehalten ist. Dabei ist es vorteilhaft, wenn das Gehäuse den Anschlag ausbildet.

Bevorzugt ist die Lenkwellenlagereinheit als Mantelrohr oder Führungskasten ausgebildet. Bevorzugt ist die Lenkwellenlagereinheit direkt oder indirekt, unter Zwischenschaltung eines oder mehrerer Mantelrohre und/oder einer Montagehalterung, mit dem Kraftfahrzeug verbindbar.

In einer Ausführungsform ist an der Lenkwelle ein Trägerteil befestigt, das eine Wippenanordnung trägt, die die Wippe aufweist.

Vorzugsweise weist die Wippe zwei Schenkel auf, und die Wippe ist in der Wippenanordnung an dem Trägerteil verkippbar um eine Schwenkachse gelagert ist, wobei die Schwenkachse in der Mitte zwischen den beiden Schenkeln liegt. Die Schwenkachse liegt bevorzugt parallel zur Drehachse der Lenkwelle. Die Wippe ist bevorzugt spiegelsymmetrisch zur Drehachse ausgebildet. Vorzugsweise trägt einer der Schenkel den Kulissenstein. Der Kulissenstein kann als ein stiftförmiges Element ausgebildet sein. Dabei ist es bevorzugt, wenn das stiftförmige Element mit der Wippe als ein einstückiges integrales Bauteil ausgebildet ist. Alternativ kann das stiftförmige Element in eine Bohrung der Wippe eingepresst sein.

Es ist bevorzugt, wenn die Wippe zwei Gegenanschläge und das Gehäuse zwei Anschläge aufweist, wobei jeder der Gegenanschläge in einer Drehrichtung mit einem Anschlag in Wirkeingriff bringbar ist, derart, dass die Verdrehung der Lenkwelle in beide Richtungen begrenzt ist. Vorzugsweise bilden die Stirnseiten der beiden Schenkel die Gegenanschläge aus und ein erster Gegenanschlag ist mit dem einen Anschlag bei Drehung der Lenkwelle in eine erste Richtung in Anschlag bringbar und der andere Gegenanschlag ist mit dem anderen Anschlag bei Drehung der Lenkwelle in eine zweite Richtung in Anschlag bringbar ist. Mit anderen Worten ist der eine der Gegenanschläge in Wirkeingriff bringbar mit einem der Anschläge in die eine Drehrichtung, und der andere der Gegenanschläge ist mit dem anderen Anschlag der beiden Anschläge in Wirkeingriff bringbar in die andere Drehrichtung, sprich der entgegengesetzten Drehrichtung.

Bevorzugt kann die Wippe aus einem metallischen Werkstoff und/oder aus einem Kunststoff gebildet sein.

Es kann vorgesehen sein, dass an den Anschlägen des Gehäuses und/oder den Gegenanschlägen ein Dämpfungskörper angeordnet ist, um ein Anschlagen zu dämpfen. Der Dämpfungskörper ist bevorzugt aus einem Kunststoff und/oder einem Elastomer gebildet.

Bevorzugt weisen die Anschläge des Gehäuses und/oder die Gegenanschläge ein Dämpfungskörper auf. Dadurch kann eine Dämpfung bei dem Anschlagen des Gegenanschlags an dem Anschlag erfolgen.

Bevorzugt ist der Dämpfungskörper aus einem Kunststoff und/oder einem Elastomer gebildet. Dadurch kann die Dämpfungswirkung weiter verbessert werden.

Bevorzugt ist die Lenksäule für ein Steer-by-Wire-Lenksystem eines Kraftfahrzeugs vorgesehen. Bevorzugt kann die Lenkwelle mit einem Handmomenten-Steller (Feedback-Aktuator) gekoppelt sein, der den Fahrzeugführer eine Rückmeldung über die Fahrbahnbeschaffenheit und andere Einflüsse vermittelt und eine Rückstellung der Lenkwelle in die Geradeausstellung bewirkt.

Weiterhin ist ein Steer-by-Wire-Lenksystem eines Kraftfahrzeuges mit einer zuvor beschriebenen Lenksäule vorgesehen.

Eine bevorzugte Ausführungsform der Erfindung wird nachfolgend anhand der Zeichnungen näher erläutert. Für gleiche oder funktionsgleiche Elemente werden in allen Zeichnungen die gleichen Bezugszeichen verwendet, diese werden daher in der Regel auch nur einmal in der Beschreibung benannt bzw. erwähnt. Es zeigen:
- Fig. 1:: eine räumliche Darstellung einer Lenksäule,
- Fig. 2:: eine räumliche Ansicht der Lenksäule aus Fig. 1 in Draufsicht auf eine Umdrehungsbegrenzungseinrichtung,
- Fig. 3:: eine Explosionszeichnung der Umdrehungsbegrenzungseinrichtung,
- Fig. 4:: eine Draufsicht auf die Umdrehungsbegrenzungseinrichtung in Geradeausstellung des Lenkrades
- Fig. 5:: eine Draufsicht auf die Umdrehungsbegrenzungseinrichtung beim Linksanschlag des Lenkrades, sowie
- Fig. 6:: eine Draufsicht auf die Umdrehungsbegrenzungseinrichtung beim Rechtsanschlag des Lenkrades.

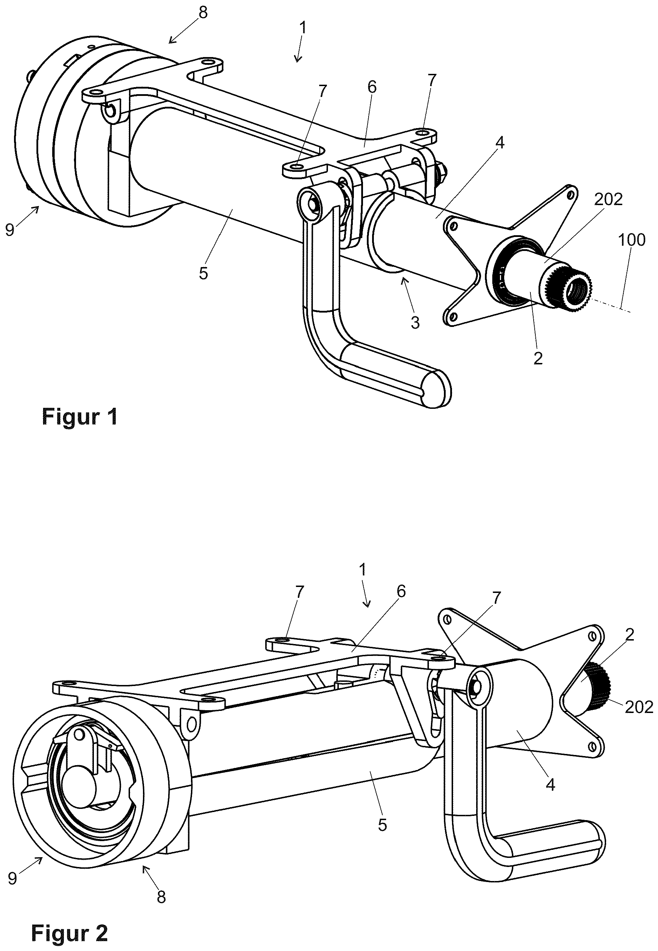

Die Figuren 1 und 2 veranschaulichen eine Lenksäule 1 für ein Kraftfahrzeug, aufweisend eine Lenkwelle 2, die um ihre Drehachse 100 drehbar in einer Lenkwellenlagereinheit 3, aufweisend ein inneres Mantelrohr 4 und ein äußeres Mantelrohr 5, gelagert ist. Das innere Mantelrohr 4 ist in dem äußeren Mantelrohr 5 entlang der Längsachse, gleichbedeutend mit der Drehachse, der Lenkwelle 2 aufgenommen und verschiebbar geführt. Das äußere Mantelrohr 5 ist um eine Schwenkachse in einem Halteteil 6 schwenkbar gelagert. Das Halteteil 6 kann in Befestigungspunkten 7 an der nicht dargestellten Karosserie des Kraftfahrzeugs befestigt werden. Weiters weist die Lenksäule eine Fixiereinrichtung 54 auf, die zwischen einer Freigabestellung und einer Fixierstellung umschaltbar ist, wobei in der Fixierstellung das innere Mantelrohr 4 gegenüber dem äußeren Mantelrohr 5 und das äußere Mantelrohr gegenüber dem als Konsole ausgebildeten Halteteil 6 festgelegt ist. In der Freigabestellung kann die zuvor beschriebene Verstellung erfolgen.

Außerdem kann die Lenksäule 1 eine Energieabsorptionseinrichtung umfassen, die im Fall einer unfallbedingten Kollision die durch den auf die Lenksäule aufprallenden Fahrzeugführer und die dadurch eingetragene Energie absorbiert.

An einem Ende, dem hinteren Ende, ist die Lenkwelle 2 mit dem nicht dargestellten Lenkrad verbunden. An dem anderen Ende ist ein Feedback-Aktuator 8 angeordnet, der über ein Getriebe auf die Lenkwelle 2 einwirkt. Der Feedback-Aktuator 8 umfasst einen Elektromotor, der die Lenkwelle 2 konzentrisch umgibt. Er dient dazu, die Rückwirkungen von der Fahrbahn auf ein Lenkrad zu simulieren und somit dem Fahrer eine Rückmeldung über das Lenk- und Fahrverhalten des Fahrzeugs zu geben.

Die Lenkwelle 2 ist bevorzugt teleskopierbar und weist neben einer Innenwelle eine die Innenwelle koaxial umgebende Außenwelle 202 auf. Das Innenprofil der Außenwelle 202 ist dabei komplementär zu einem Innenprofil der Innenwelle ausgebildet und erlaubt eine Drehmomentübertragung. Ein nicht dargestelltes Lenkrad kann an die Außenwelle 202 befestigt werden.

Am lenkradfernen Ende der Lenksäule 1 ist eine Umdrehungsbegrenzungseinrichtung 9 vorgesehen, die dazu ausgebildet, ein Verdrehen der Lenkwelle 2 zu begrenzen, d. h. sie bringt bei einem vordefinierten Drehwinkel die notwendige Kraft auf, um eine Rotation der Lenkwelle 2 zu verhindern.

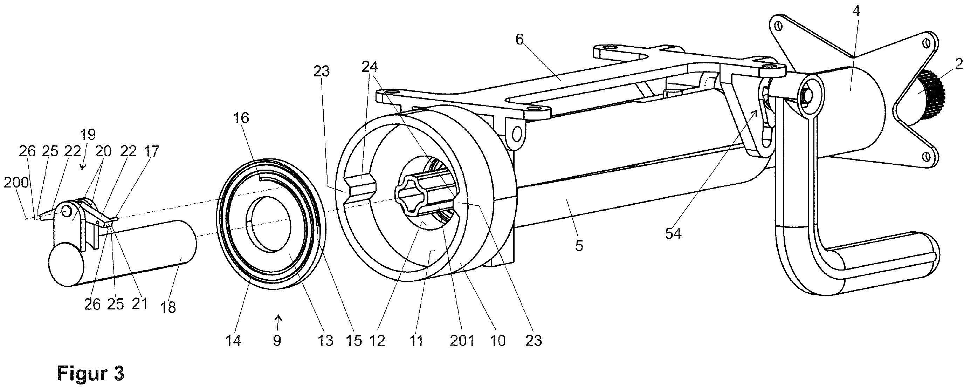

In der Figur 3 die Umdrehungsbegrenzungseinrichtung 9 im Detail dargestellt. Sie umfasst ein am äußeren Mantelrohr 5 befestigtes Gehäuse 10, dass die Innenwelle 201 umgibt. Das Gehäuse 10 ist topfförmig mit einem kreisförmigen Boden 11 ausgebildet. Der Boden 11 weist eine Öffnung 12 auf, die von der Innenwelle 201 durchsetzt ist. Auf dem Boden 11 ist ein scheibenförmiger Kulissenträger 13 angeordnet, der rotationssymmetrisch zur Längsachse der Lenkwelle 2 ausgebildet ist.

Der Kulissenträger 13 weist eine spiralförmige Kulissenbahn 14 auf, die auf der bodenfernen Seite ausgebildet ist. Es kann aber auch vorgesehen sein, dass der Boden selbst die Kulissenbahn aufweist.

Die Kulissenbahn 14 hat ein in Radialrichtung zur Längsachse der Lenkwelle 2 außen liegendes äußeres freies Ende 15 und ein in Radialrichtung innen liegendes inneres freies Ende 16. Die Kulissenbahn 14 ist durch eine in die Oberseite eingebrachte Nut gebildet.

Ein Kulissenstein 17 gleitet in der Kulissenbahn 14. Vorzugsweise ist der Kulissenstein 17 ein stiftförmiges Element. Der Kulissenstein 17 ist mittels eines Trägerteils 18 mit der Innenwelle 201 drehfest verbunden. Das Trägerteil 18 ist hülsenartig ausgebildet und sitzt formschlüssig auf dem Ende der Innenwelle 201. Das Trägerteil 18 weist an dem lenkradfernen Ende eine Wippenanordnung 19 auf. Die Wippenanordnung 19 umfasst zwei parallel angeordnete Fortsätze 20, die sich etwa in Radialrichtung zur Drehachse 100 von dem Trägerteil 18 erstrecken und zwischen den Fortsätzen 20 in Längsrichtung eine Wippe 21 drehbar gehalten ist. Die Wippe 21 weist zwei Schenkel 22 auf, die in einem Winkel von 120° zueinander angeordnet sind, wobei einer der Schenkel 22 den Kulissenstein 17 trägt. Der Winkel der Schenkel 22 kann jedoch auch einen anderen Wert aufweisen, beispielsweise zwischen 100° und 180°. Die Wippe 21 ist symmetrisch zwischen den beiden Schenkeln 22 um eine Schwenkachse 200 verkippbar gelagert. Die Schwenkachse 200 ist parallel zur Drehachse 100 der Lenkwelle ausgerichtet. Das Trägerteil 18 sitzt auf dem Ende der Lenkwelle und durchsetzt die Öffnung in dem Kulissenträger 13 und in dem Gehäuse 10. Die Wippenanordnung 19 liegt im montierten Zustand der Kulissenbahn 14 zugewendet.

Durch eine Drehung der Lenkwelle 2 relativ zum äußeren Mantelrohr 5 und zur Kulissenbahn 14 bewegt sich der an der Lenkwelle 2 gehaltene Kulissenstein 17 derart in der Kulissenbahn 14, dass die mit dem Kulissenstein 17 verbundene Wippe 21 verkippt. Die Drehung der Lenkwelle 2 wird durch das Verkippen der Wippe 21 in beide Drehrichtungen durch jeweils einen an dem Gehäuse 10 ausgebildeten Anschlag begrenzt. Das Gehäuse 10 weist auf der Innenseite des Mantels Vorsprünge 23 auf, die jeweils einen Anschlag 24 ausbilden. Die Stirnseiten 25 der Schenkel 22 der Wippe 21 bilden jeweils einen Gegenanschlag 26 aus. Die Wippe 21 bewegt sich beim Lenken an den Vorsprüngen 23 vorbei. Erst wenn ein Endanschlag der Drehbewegung erreicht wird, ist die Wippe 21 derart verkippt, dass einer der Gegenanschläge 26 an einem der Anschläge 24 am Gehäuse 10 anstößt und somit ein weiteres Verdrehen der Lenkwelle sicher verhindert.

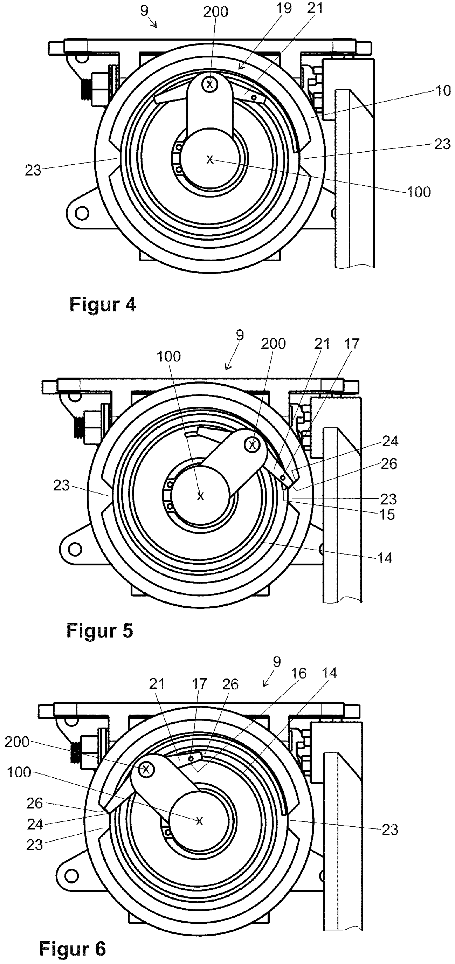

Die Figur 4 zeigt die Umdrehungsbegrenzungseinrichtung 9 in einer Mittelstellung (Geradeausstellung) des Lenkrades bzw. der Lenksäule. Die Wippenanordnung 19 befindet sich in Umfangsrichtung mittig zwischen den beiden Vorsprüngen 23 des Gehäuses 10. Die Wippe 21 ist zur Tangente der Rotationsachse in der Schwenkachse 200 symmetrisch ausgerichtet. Die Wippe 21 kann soweit verschwenkt werden, bis sie auf einen der beiden Vorsprünge 23 stößt und eine weitere Verdrehung blockiert ist. Bevorzugt beträgt der Lenkwinkel der Lenkwelle vom rechten Endanschlag zum linken Endanschlag zwischen 800° und 360°, besonders bevorzugt 630°.

In Figur 5 ist der Anschlag beim Linksdrehen der Umdrehungsbegrenzungseinrichtung 9 dargestellt. Der Kulissenstein 17 befindet sich an dem äußeren Enden 15 der Kulissenbahn 14. Die Wippe 21 liegt mit dem kulissensteinnahen Gegenanschlag 26 in Anlage an einem Anschlag 24 eines Vorsprungs 23.

In Figur 6 ist der Anschlag beim Rechtsdrehen der Umdrehungsbegrenzungseinrichtung 9 dargestellt. Der Kulissenstein 17 befindet sich an dem inneren Enden 16 der Kulissenbahn 14. Die Wippe 21 liegt mit dem kulissensteinfernen Gegenanschlag 26 in Anlage an dem Anschlag 24 des anderen Vorsprungs 23.

Bevorzugt kann ein Dämpfungskörper vorgesehen sein, der wenigstens an einem der Anschläge und/oder der Gegenanschläge vorgesehen ist, um ein Anschlagen zu dämpfen. Ein solcher Dämpfungskörper kann aus einem Kunststoff und/oder einem Elastomer gebildet sein.

Die Umdrehungsbegrenzungseinrichtung weist eine geringe Toleranzanfälligkeit und einen ruhigen geräuscharmen Lauf auf.

## Patentansprüche

1. Lenksäule (1) für ein Kraftfahrzeug umfassend eine Lenkwelle (2), die in einer Lenkwellenlagereinheit (3) drehbar gelagert ist, und eine Umdrehungsbegrenzungseinrichtung (9), die dazu eingerichtet ist, ein Verdrehen der Lenkwelle (2) zu begrenzen, wobei die Umdrehungsbegrenzungseinrichtung (9) einen Kulissenträger (13) aufweist, der an der Lenkwellenlagereinheit (3) befestigt ist und eine spiralförmige, die Lenkwelle (12) umgebende Kulissenbahn (14) aufweist, wobei in der Kulissenbahn (14) ein Kulissenstein (17) verlagerbar geführt ist, **dadurch gekennzeichnet, dass** der Kulissenstein (17) mit einer Wippe (21) gekoppelt ist, wobei die Wippe (21) verkippbar an der Lenkwelle (2) gehalten ist, wobei die Wippe (21) wenigstens einen Gegenanschlag (26) aufweist, der mit einem an der Lenkwellenlagereinheit (3) befestigten Anschlag (24) zur Drehbegrenzung der Drehung der Lenkwelle (2) in Wirkeingriff bringbar ist.

2. Lenksäule nach Anspruch 1, **dadurch gekennzeichnet, dass** an der Lenkwelle (2) ein Trägerteil (18) befestigt ist, das eine Wippenanordnung (19) trägt, die die Wippe (21) aufweist.

3. Lenksäule nach Anspruch 1 oder 2, **dadurch gekennzeichnet, dass** der Kulissenstein (17) als ein stiftförmiges Element ausgebildet ist.

4. Lenksäule nach Anspruch 3, **dadurch gekennzeichnet, dass** das stiftförmige Element (17) mit der Wippe (21) als ein einstückiges integrales Bauteil ausgebildet ist.

5. Lenksäule nach einem der vorhergehenden Ansprüche, **dadurch gekennzeichnet, dass** die Wippe (21) zwei Schenkel (22) aufweist, und die Wippe (21) in der Wippenanordnung (19) verkippbar um eine Schwenkachse (200) gelagert ist.

6. Lenksäule nach einem der vorhergehenden Ansprüche, **dadurch gekennzeichnet, dass** die Wippe (21) zwei Gegenanschläge (26) und das Gehäuse (10) zwei Anschläge (24) aufweist, wobei jeder der Gegenanschläge (26) in einer Drehrichtung mit einem Anschlag (24) in Wirkeingriff bringbar ist, derart, dass die Verdrehung der Lenkwelle (2) in beide Richtungen begrenzt ist.

7. Lenksäule nach Anspruch 5 oder 6, **dadurch gekennzeichnet, dass** die Stirnseiten (25) der Schenkel (22) jeweils einen Gegenanschlag (26) ausbilden und ein erster Gegenanschlag (26) mit dem einen Anschlag (24) bei Drehung der Lenkwelle (2) in eine erste Richtung in Anschlag bringbar ist und der andere Gegenanschlag (26) mit dem anderen Anschlag (24) bei Drehung der Lenkwelle (2) in eine zweite Richtung in Anschlag bringbar ist.

8. Lenksäule nach einem der vorhergehenden Ansprüche, **dadurch gekennzeichnet, dass** an den Anschlägen (24) des Gehäuses (10) und/oder den Gegenanschlägen (26) ein Dämpfungskörper angeordnet ist, um ein Anschlagen zu dämpfen.

9. Lenksäule nach Anspruch 8, **dadurch gekennzeichnet, dass** der Dämpfungskörper aus einem Kunststoff und/oder einem Elastomer gebildet ist.

10. Steer-by-Wire-Lenksystem eines Kraftfahrzeuges mit einer Lenksäule (1) nach einem der vorhergehenden Ansprüche 1 bis 9.

## Claims

1. Steering column (1) for a motor vehicle, comprising a steering shaft (2) which is rotatably mounted in a steering-shaft bearing unit (3), and a rotation-limitation device (9) which is configured to limit rotation of the steering shaft (2), wherein the rotation-limitation device (9) has a slotted-guide carrier (13) which is fastened to the steering-shaft bearing unit (3) and which has a helical slotted-guide track (14) which surrounds the steering shaft (12), wherein a sliding block (17) is displaceably guided in the slotted-guide track (14), **characterized in that** the sliding block (17) is coupled to a rocker (21), wherein the rocker (21) is tiltably held on the steering shaft (2), wherein the rocker (21) has at least one counterpart stop (26) which, for the purpose of limiting the rotation of the steering shaft (2), is able to be brought into operative engagement with a stop (24) which is fastened to the steering-shaft bearing unit (3).

2. Steering column according to Claim 1, **characterized in that** a carrier part (18) which carries a rocker arrangement (19) which has the rocker (21) is fastened to the steering shaft (2).

3. Steering column according to Claim 1 or 2, **characterized in that** the sliding block (17) is in the form of a pin-like element.

4. Steering column according to Claim 3, **characterized in that** the pin-like element (17) is formed with the rocker (21) as a one-piece, integral component.

5. Steering column according to one of the preceding claims, **characterized in that** the rocker (21) has two limbs (22), and the rocker (21) is mounted in the rocker arrangement (19) so as to be tiltable about a pivot axis (200).

6. Steering column according to one of the preceding claims, **characterized in that** the rocker (21) has two counterpart stops (26) and the housing (10) has two stops (24), wherein each of the counterpart stops (26) is able to be brought into operative engagement with a stop (24) in a direction of rotation such that the rotation of the steering shaft (2) is limited in both directions.

7. Steering column according to Claim 5 or 6, **characterized in that** the end faces (25) of the limbs (22) each form a counterpart stop (26), and a first counterpart stop (26) is able to be brought into abutment with one stop (24) if the steering shaft (2) is rotated in a first direction and the other counterpart stop (26) is able to be brought into abutment with the other stop (24) if the steering shaft (2) is rotated in a second direction.

8. Steering column according to one of the preceding claims, **characterized in that** a damping body is arranged on the stops (24) of the housing (10) and/or on the counterpart stops (26) in order to dampen impact.

9. Steering column according to Claim 8, **characterized in that** the damping body is formed from a plastic and/or an elastomer.

10. Steer-by-wire steering system of a motor vehicle, having a steering column (1) according to one of preceding Claims 1 to 9.

## Revendications

1. Colonne de direction (1) pour un véhicule automobile, comprenant un arbre de direction (2) qui est monté de manière rotative dans une unité de palier d'arbre de direction (3), et un dispositif de limitation de rotation (9) qui est adapté pour limiter une rotation de l'arbre de direction (2), le dispositif de limitation de rotation (9) présentant un support à coulisse (13) qui est fixé à l'unité de palier d'arbre de direction (3) et qui présente une piste de coulisse (14) en forme de spirale, entourant l'arbre de direction (12), un coulisseau (17) étant guidé de manière déplaçable dans la piste de coulisse (14), **caractérisée en ce que** le coulisseau (17) est couplé à une bascule (21), la bascule (21) étant maintenue de manière à pouvoir basculer sur l'arbre de direction (2), la bascule (21) présentant au moins une contre-butée (26) qui peut être mise en prise active avec une butée (24) fixée sur l'unité de palier d'arbre de direction (3) pour limiter la rotation de l'arbre de direction (2).

2. Colonne de direction selon la revendication 1, **caractérisée en ce qu'**une partie de support (18) est fixée à l'arbre de direction (2), laquelle porte un agencement de bascule (19) qui présente la bascule (21).

3. Colonne de direction selon la revendication 1 ou 2, **caractérisée en ce que** le coulisseau (17) est configuré sous la forme d'un élément en forme de broche.

4. Colonne de direction selon la revendication 3, **caractérisée en ce que** l'élément en forme de broche (17) est configuré avec la bascule (21) sous la forme d'un composant intégral d'un seul tenant.

5. Colonne de direction selon l'une quelconque des revendications précédentes, **caractérisée en ce que** la bascule (21) présente deux branches (22), et la bascule (21) est montée dans l'agencement de bascule (19) de manière à pouvoir basculer autour d'un axe de pivotement (200) .

6. Colonne de direction selon l'une quelconque des revendications précédentes, **caractérisée en ce que** la bascule (21) présente deux contre-butées (26) et le boîtier (10) deux butées (24), chacune des contre-butées (26) pouvant être mise en prise active avec une butée (24) dans une direction de rotation, de telle sorte que la rotation de l'arbre de direction (2) est limitée dans les deux directions.

7. Colonne de direction selon la revendication 5 ou 6, **caractérisée en ce que** les côtés frontaux (25) des branches (22) forment chacun une contre-butée (26) et une première contre-butée (26) peut être mise en butée avec l'une des butées (24) lors de la rotation de l'arbre de direction (2) dans une première direction et l'autre contre-butée (26) peut être mise en butée avec l'autre butée (24) lors de la rotation de l'arbre de direction (2) dans une deuxième direction.

8. Colonne de direction selon l'une quelconque des revendications précédentes, **caractérisée en ce qu'**un corps d'amortissement est agencé sur les butées (24) du boîtier (10) et/ou les contre-butées (26) afin d'amortir une butée.

9. Colonne de direction selon la revendication 8, **caractérisée en ce que** le corps d'amortissement est formé d'une matière plastique et/ou d'un élastomère.

10. Système de direction à commande électrique d'un véhicule automobile avec une colonne de direction (1) selon l'une quelconque des revendications 1 à 9 précédentes.
